# EUROPÄISCHE PATENTSCHRIFT

(11) **EP 0 668 463 B1**
(45) Veröffentlichungstag und Bekanntmachung des Hinweises auf die Patenterteilung: **26.08.1998**
(21) Anmeldenummer: 95100673.3
(22) Anmeldetag: 19.01.1995
(51) Int. Cl.: F16L 7/00

(54) **Abstandhalter**
Spacer
Dispositif d'espacement

(30) Priorität: 27.01.1994 DE 9401354 U
(43) Veröffentlichungstag der Anmeldung: 23.08.1995
(73) Patentinhaber: TONA TONWERKE SCHMITZ GMBH, D-53894 Mechernich (DE)
(72) Erfinder: Kihm, Gereon, Dipl.-Wirtsch.-Ing., D-53340 Meckenheim (DE); Dick, René, D-51149 Köln (DE)
(74) Vertreter: Hennicke, Albrecht, Dipl.-Ing.

(56) Entgegenhaltungen:
- DE-A- 4 313 433
- DE-C- 603 278
- GB-A- 1 316 110
- US-A- 4 250 927
- US-A- 4 607 665

## Beschreibung

Die Erfindung betrifft einen Abstandhalter für das Innenrohr von mehrschaligen Rohrleitungen, wie Schornsteinen, Be- und Entlüftungskanälen oder Abgasleitungen, bei denen ein Mantelrohr das Innenrohr mit Abstand umgibt, mit einer das Innenrohr umgreifenden, in ihrem Durchmesser veränderbaren Manschette und mit Abstützelementen, die am Mantelstein anliegen.

Bei mehrschaligen Schornsteinen ist es bekannt, das Innenrohr im Mantelrohr mit Blechmanschetten abzustützen, die am Innenrohr festgeklemmt werden und an deren Außenumfang federnde Zungen angeschweißt sind, die mit ihren freien Enden an der Innenwand des Mantelrohres anliegen. Die Manschetten sind einteilig oder zweiteilig und haben an ihren Enden nach außen abgewinkelte Flansche, die mit Schrauben zusammengezogen werden.

Die Herstellung und das Anbringen dieser Manschetten am Innenrohr ist aufwendig, da jede einzelne Manschette vor dem Umlegen um das Innenrohr vollständig geöffnet und danach wieder zusammengeschraubt werden muß. Da sich das Innenrohr bei Erwärmung ausdehnt und bei Abkühlung zusammenzieht, treten Durchmesserschwankungen auf, die von den Manschetten aufgenommen werden müssen. Die Manschetten können sich hierbei lockern und im Laufe der Zeit im Mantelrohr nach unten rutschen, so daß sie ihren Zweck nicht mehr erfüllen.

Es ist auch bereits ein Abstandhalter bekannt (US-A-4 250 927), mit dem ein Innenrohr im Abstand von einem Außenrohr gehalten werden kann. Dieser Abstandhalter ist eine Manschette aus geradlinigen Blechabschnitten, die an einer Stelle miteinander verbunden sind und an ihren freien Enden abgebogene Schenkel tragen, deren freie Ränder nach außen umgebogen sind. Diese Manschette wird um das Innenrohr gelegt und an den umgebogenen Rändern zusammengezogen, wobei sich die zunächst geradlinigen Blechabschnitte an den Außenumfang des Innenrohres anlegen. Beim Einführen in das Mantelrohr stützt sich dann die Manschette mit ihrem Scheitel und den umgebogenen Rändern auf der Innenfläche des Mantelrohres ab.

Da sich die Manschette zwischen den beiden, im Abstand voneinander zu haltenden Rohren verklemmt, sind besondere Haltevorrichtungen an den Rohren nicht erforderlich. Die Ausbildung der Abstandhalter hat jedoch zur Folge, daß jeder Abstandhalter nur für einen ganz bestimmten Innenrohr-Durchmesser und für ein bestimmtes Verhältnis der Durchmesser von Innenrohr und Außenrohr brauchbar ist, da für zu große Ringbreiten keine Klemmwirkung erzielt wird und bei zu kleinen Klemmbreiten die Manschette nicht mehr eingeführt werden kann.

Aufgabe der Erfindung ist es, einen Abstandhalter der eingangs näher erläuterten Art zu schaffen, der einfach und aus wenigen Einzelteilen herzustellen und leicht zu montieren ist, sich auch zur sicheren Abstützung von unrunden Rohren eignet und für viele unterschiedliche Rohrdurchmesser und Ringbreiten verwendbar ist und der im eingebauten Zustand auch thermisch bedingten Durchmesseränderungen des Innenrohres folgen kann.

Diese Aufgabe wird mit der Erfindung dadurch gelöst, daß die Manschette aus mindestens drei Ringsegmenten besteht, die an ihren Enden angeordnete, etwa radial nach außen gerichtete Arme aufweisen, an denen die Abstützelemente befestigt sind.

Diese Ausgestaltung hat den Vorteil, daß die Abstandhalter nicht nur bei Neubau einer mehrschaligen Rohrleitung, sondern auch nachträglich am Innenrohr einer schon vorhandenen Rohrleitung angebracht werden können, wobei zunächst die Ringsegmente der Manschette um das Innenrohr gelegt und erst anschließend die Abstützelemente an den Armen der Manschette befestigt werden. Ein solcher Abstandhalter garantiert einen festen Sitz der Manschette am Innenrohr, da die Manschette unter Vorspannung um das Rohr gelegt werden kann und im Bereich der nebeneinander angeordneten, radial nach außen gerichteten Arme benachbarter Ringsegmente "atmen" und Durchmesseränderungen des Innenrohres folgen kann.

Um einen dauerhaft festen Sitz am Innenrohr auch dann zu gewährleisten, wenn dieses infolge thermischer Beanspruchung ständig seinen Durchmesser ändert, ist es zweckmäßig, wenn die Ringsegmente der Manschette aus einem federelastischen Material bestehen und einen Krümmungsradius haben, der größer ist als der Radius der äußeren Umfangsfläche eines zylindrischen Innenrohres. Eine solche Ausgestaltung hat den Vorteil, daß die aus den Ringsegmenten zusammengesetzte Manschette in Axialrichtung über das abzustützende Innenrohr geschoben werden kann und sich an der gewünschten Stelle von selbst federnd festklemmt, wobei jeweils der mittlere Teil eines jeden Ringsegmentes an der äußeren Umfangsfläche des Innenrohres federnd anliegt, während die Endbereiche benachbarter Ringsegmente einen gewissen Abstand von der äußeren Umfangsfläche des Innenrohres haben.

Wenn sich das Innenrohr ausdehnt und seinen Durchmesser vergrößert, können sich die Ringsegmente elastisch verformen und legen sich längs einer längeren Umfangsstrecke am Innenrohr an, wobei sich die miteinander verbundenen Endbereiche der Ringsegmente weiter auf die äußere Umfangsfläche des Innenrohres zubewegen.

Die Ringsegmente können in Umfangsrichtung eine Länge haben, die kleiner ist als die zu dem jeweiligen Ringsegment gehörende äußere Umfangslänge des Innenrohres. Die radial abstehenden Arme benachbarter Ringsegmente klaffen dann an ihren Abbiegestellen etwas auseinander und können mit geeigneten Spannmitteln zusammengezogen werden, wodurch der Klemmdruck verstärkt wird, mit dem die Manschette am Innenrohr anliegt.

Die Ringsegmente der Manschette können auch auf ihrer ganzen Umfangslänge am Außenumfang des Innenrohres anliegen, wenn ein satter Körperschluß zwischen Manschette und Innenrohr gewünscht wird. Die Ringsegmente können an den Enden mindestens eines ihrer Arme mit dem benachbarten Ringsegment einstückig verbunden sein. Besonders zweckmäßig ist es jedoch, wenn die Arme von je zwei benachbarten Ringsegmenten durch je ein Abstützelement miteinander verbunden sind. Alle Ringsegmente eines Abstützelementes können dann gleich ausgebildet werden. Sie werden erst beim Einbau des Abstandhalters in die Rohrleitung von den Abstützelementen zu dem Abstandhalter verbunden, wobei die Abstützelemente nicht nur eine Stützfunktion, sondern auch eine Verbindungs- und Klemmfunktion ausüben.

Zu diesem Zweck haben die Abstützelemente einen Stützschenkel, einen Tragschenkel und eine Öffnung zur Aufnahme der Armenden von zwei benachbarten Ringsegmenten. Mit dem Stützschenkel liegen die Abstützelemente auf einer Lagerfuge zwischen übereinandergesetzten Mantelsteinen auf, oder sie stützen sich mit dem Rand des Stützschenkels an der Innenwand des Mantelrohres ab, wenn die Abstandhalter nachträglich in die Rohrleitung eingebaut werden. In die Öffnung werden die Armenden von zwei benachbarten Ringsegmenten eingeschoben, die hierdurch aufeinandergepreßt und miteinander verbunden werden und sich am Tragschenkel abstützen.

Die Ringsegmente der Manschette und die Abstützelemente werden zweckmäßig aus Blechstreifen gebildet. Jedes Abstützelement hat mindestens einen Schlitz und eine Arretiervorrichtung zum Einführen und Arretieren der aufeinanderliegenden Armenden von zwei benachbarten Ringsegmenten.

Die Arretiervorrichtungen sind zweckmäßig an den Armen der Ringsegmente angeordnet. Sie können von Aufrauhungen am oberen und/oder unteren Rand der Ringsegmentarme gebildet werden, an denen sich der Schlitz im Abstützelement mit seinem oberen und unteren Rand verklemmt. Eine solche Ausgestaltung ist besonders einfach, da zur Montage keine Werkzeuge benötigt werden und die Abstützelemente sich von selbst an den Armen der Ringsegmente festklemmen.

Die Arretiervorrichtung kann aber auch von Sicken und/oder federnden Lappen gebildet werden, die aus den Armen der Ringsegmente herausgedrückt sind und neben dem Schlitz am Abstützelement anstoßen. Beim Überstreifen der Abstützelemente werden die äußeren Lappen von den Seitenwänden des Schlitzes im Abstützelement zunächst federnd zusammengedrückt. Sie kehren dann in ihre nach außen gedrückte Lage zurück und stützen sich mit ihren Stirnseiten an dem an ihnen anliegenden Klemmschenkel oder Tragschenkel des Abstützelementes ab.

Zu diesem Zweck hat das Abstützelement zweckmäßig einen Auflageschenkel und einen Klemmschenkel für die Ringsegmentarme und weist mindestens im Klemmschenkel einen Schlitz zum Einstecken der Ringsegmentarme auf. Wenn die Arme benachbarter Ringsegmente im eingebauten Zustand einen gewissen Abstand voneinander haben, können sie durch mehr oder weniger weites Einschieben in den Schlitz eines Abstützelementes in Umfangsrichtung der Manschette zusammengedrückt werden, so daß die Spannung der am Innenrohr anliegenden Manschette erhöht wird. Hierbei ist es besonders zweckmäßig, wenn nicht nur der Klemmschenkel, sondern auch der Tragschenkel des Abstützelementes miteinander fluchtende Schlitze aufweisen, durch welche die Arme benachbarter Ringsegmente hindurchgeschoben werden.

Wie bereits oben erwähnt, kann der Stützschenkel eines Abstützelementes etwa radial und parallel zum Auflageschenkel angeordnet und so lang sein, daß er in das Mantelrohr eingreifen kann. Eine solche Ausführung ist für Abstandhalter zweckmäßig, die zusammen mit dem Aufbau der mehrschaligen Rohrleitung eingebaut werden und deren Stützschenkel dann in die Lagerfuge aufeinandergesetzter Mantelsteine eingreifen kann. Für nachträglich einzubauende Abstandhalter ist es zweckmäßiger, wenn der Stützschenkel als Federelement ausgebildet ist, das unter Vorspannung an der Innenwand des Mantelrohres anliegt.

Weitere Merkmale und Vorteile der Erfindung ergeben sich aus der nachfolgenden Beschreibung und den Zeichnungen, in denen bevorzugte Ausführungsformen der Erfindung an Beispielen näher erläutert sind. Es zeigt:
- Fig. 1: einen zweischaligen Schornstein, dessen Innenrohr von einem Abstandhalter nach der Erfindung gehalten wird, in einem schematischen Querschnitt,
- Fig. 2: einen Teillängsschnitt der Fig. 1 im vergrößerten Maßstab,
- Fig. 3: eine andere Ausführungsform der Abstützung des Abstandhalters nach Fig. 1 in einer Teilansicht und teilweise im Schnitt,
- Fig. 4: eine Draufsicht auf die Armenden des Abstandhalters in Richtung des Pfeiles IV der Fig. 3,
- Fig. 5: eine Variante der Armenden des Abstandhalters nach der Erfindung in einer Seitenansicht,
- Fig. 6: eine andere Ausführungsform des Abstandhalters nach der Erfindung in einer Draufsicht,
- Fig. 7: eines der bei dem Abstandhalter nach Fig. 6 verwendeten Abstützelemente in einem Radialschnitt nach Linie VII-VII der Fig. 6,
- Fig. 8: eine Stirnansicht des in Fig. 7 dargestellten Abstützelementes in Richtung des Pfeiles VIII gesehen,
- Fig. 9: einen zweischaligen Schornstein mit einer dritten Ausführungsform des Abstandhalters nach der Erfindung in einem Teilquerschnitt und
- Fig. 10: den Gegenstand der Fig. 9 in einem Teillängsschnitt nach Linie X-X.

In den Zeichnungen ist mit 10 ein zweischaliger Schornstein bezeichnet, der aus einem Innenrohr 11 aus Keramikmaterial und einem Mantelrohr 12 besteht, welches das Innenrohr mit Abstand umgibt, so daß zwischen der Innenwand 13 des Mantelrohres und der äußeren Umfangsfläche 14 des Innenrohres ein ringförmiger Zwischenraum 15 verbleibt. Dieser ringförmige Zwischenraum 15 bleibt gewöhnlich leer und dient der Belüftung oder Entlüftung der Rohrleitung oder benachbarter Räume. Er kann aber auch mit einem Dämmaterial ausgefüllt sein.

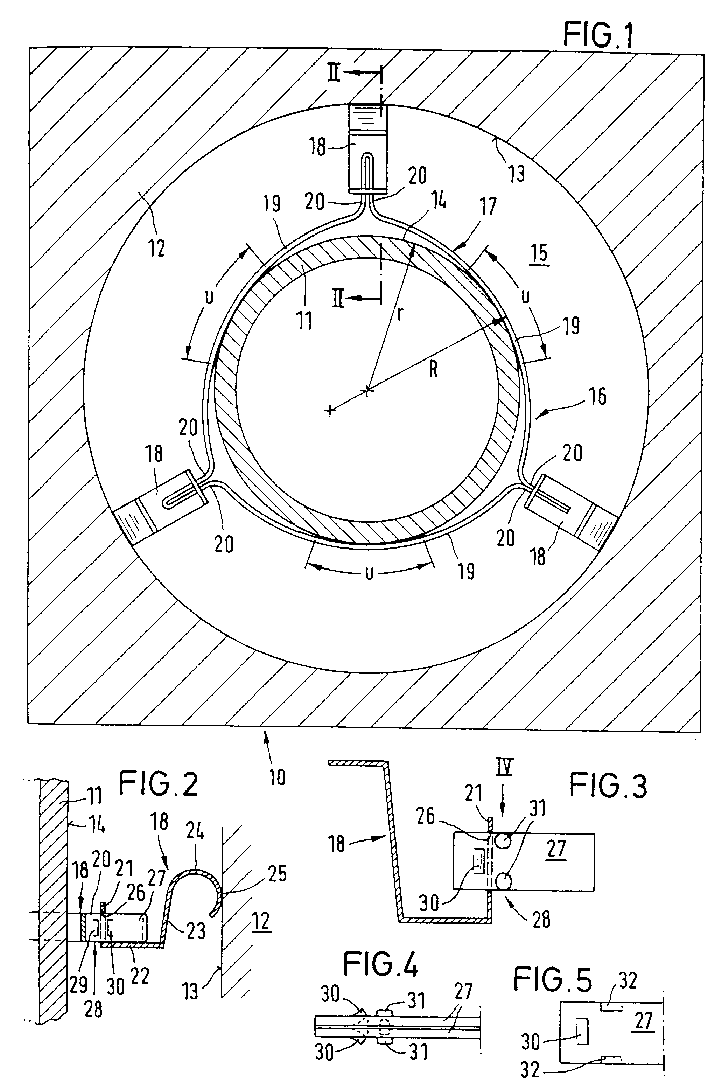

Um das Innenrohr 11 in dem vom Mantelrohr umschlossenen Zwischenraum zu zentrieren und in der Mitte zu halten, sind im axialen Abstand voneinander am Innenrohr 11 Abstandhalter befestigt, von denen in den Fig. 1, 6 und 9 jeweils einer dargestellt ist und die als Ganzes mit 16 bezeichnet ist. Von diesen Abstandhaltern sind in den Zeichnungen drei verschiedene Ausführungsformen dargestellt.

Der in Fig. 1 dargestellte Abstandhalter 16 besteht aus einer Manschette 17, die das Innenrohr 11 umgreift und aus drei Abstützelementen 18, welche die Manschette 17 tragen und sich an der Innenwand 13 des Mantelrohres 12 abstützen.

Bei dem in Fig. 1 dargestellten Ausführungsbeispiel besteht die Manschette 17 aus drei Ringsegmenten 19, von denen jedes sich über ein Drittel des Außenumfanges 14 des Innenrohres 11 erstreckt und an seinen Enden etwa radial nach außen gerichtete Arme 20 aufweist. Zwei der drei Armpaare benachbarter Ringsegmente 19 sind einstückig miteinander verbunden, so daß die ganze Manschette 17 aus einem Stück besteht, aber an einer Stelle offen ist, wo die Arme des dritten Armpaares aufeinanderliegen und durch ein Abstützelement 18 zusammengehalten werden.

Die Manschette 17 und die Abstützelemente 18 sind aus schmalen Blechstreifen gebildet, die federelastisch sind und eine einfache und leichte Handhabung gestatten.

Man erkennt aus Fig. 1, daß die Ringsegmente 19 einen Krümmungsradius R haben, der größer ist als der Radius r der äußeren Umfangsfläche 14 des zylindrischen Innenrohres 11. Die Ringsegmente 19 liegen hierdurch unter Federvorspannung etwa in ihrem mittleren Drittel u an der äußeren Umfangsfläche 14 an, entfernen sich aber in dem ihren Armen 20 benachbarten Bereich vom Außenumfang des Innenrohres. Der Innenumfang der Manschette 17 ist also etwas größer als der Außenumfang 14 des Innenrohres 11. Hierdurch ist es möglich, die Manschette 17 bei der Montage zu spreizen, so daß die Manschette leicht axial über das Innenrohr 11 geschoben werden kann. Sobald die Spreizkraft nicht mehr wirkt, legen sich die Ringsegmente 19 der Manschette unter Federspannung an die äußere Umfangsfläche 14 des Innenrohres 11 in ihrem mittleren Drittel u an und klemmen sich hierdurch am Innenrohr 11 fest.

Auf die einstückig miteinander verbundenen Armpaare 20 und die voneinander getrennten, aber aufeinanderliegenden Arme 20 der Manschette 17 ist jeweils ein Abstützelement 18 aufgesteckt, das in Fig. 2 näher dargestellt ist. Diese Abstützelemente 18 haben bei der in Fig. 1 dargestellten Ausführungsform des Abstandhalters etwa die Form der Ziffer fünf. Jedes Abstützelement 18 besteht aus einem Klemmschenkel 21, einem Auflageschenkel 22, einem Tragschenkel 23 und einem Stützschenkel 24, der bei den Abstützelementen 18 des Abstandhalters 16 nach Fig. 1 zu einer offenen Öse gebogen ist und mit seiner gekrümmten Schulter 25 an der Innenwand 13 des Mantelrohres 12 unter Federvorspannung anliegt. Im Klemmschenkel 21 des Abstützelementes 18 befindet sich ein Schlitz 26, dessen Höhe der Höhe der Manschettenarme 20 entspricht und der so breit ist wie zwei aufeinanderliegende Manschettenarme 20, die radial durch den Schlitz 26 des Abstützelementes 18 hindurchgesteckt sind. Damit die Armenden 27 in dem Schlitz 26 des Abstützelementes 18 sicher festgehalten werden, ist eine Arretiervorrichtung 28 vorgesehen, die bei der in cen Fig. 1 und 2 dargestellten Ausführungsform von vier federnden Lappen 29 und 30 gebildet wird, von denen jeweils zwei 29 und 30 im Abstand der Blechdicke des Klemmschenkels 21 des Abstützelementes 18 aus dem Armende 27 von zwei aufeinanderliegenden Armen benachbarter Ringsegmente 19 nach außen herausgedrückt sind. Die federnden Lappen 29 und 30 stützen sich auf den einander gegenüberliegenden Stirnflächen des Klemmschenkels unmittelbar neben dem Schlitz 26 ab und halten hierdurch das Abstützelement fest, welches seinerseits mit den Seitenkanten seines Schlitzes 26 die benachbarten, aufeinanderliegenden Arme 20 von zwei Ringsegmenten fest zusammenpreßt und ihre Unterkanten mit dem Auflageschenkel 22 abstüzt.

Man erkennt, daß die Arretiervorrichtung 28 auch etwas anders ausgebildet sein kann, wie dies beispielsweise in den Fig. 3 bis 5 dargestellt ist. So genügt es beispielsweise, an jedem Armende 27 nur einen federnden Lappen 30 am äußeren Ende vorzusehen, der sich auf der Innenseite des Klemmschenkels 21 abstützt und auf der gegenüberliegenden Seite des Klemmschenkels einen oder zwei Noppen 31 vorzusehen, die aus dem Blech des Armendes 27 nach außen herausgedrückt sind und zusammen mit dem federnden Lappen 30 das Armende 27 am Klemmschenkel 21 auf beiden Seiten des Schlitzes 26 abstützen.

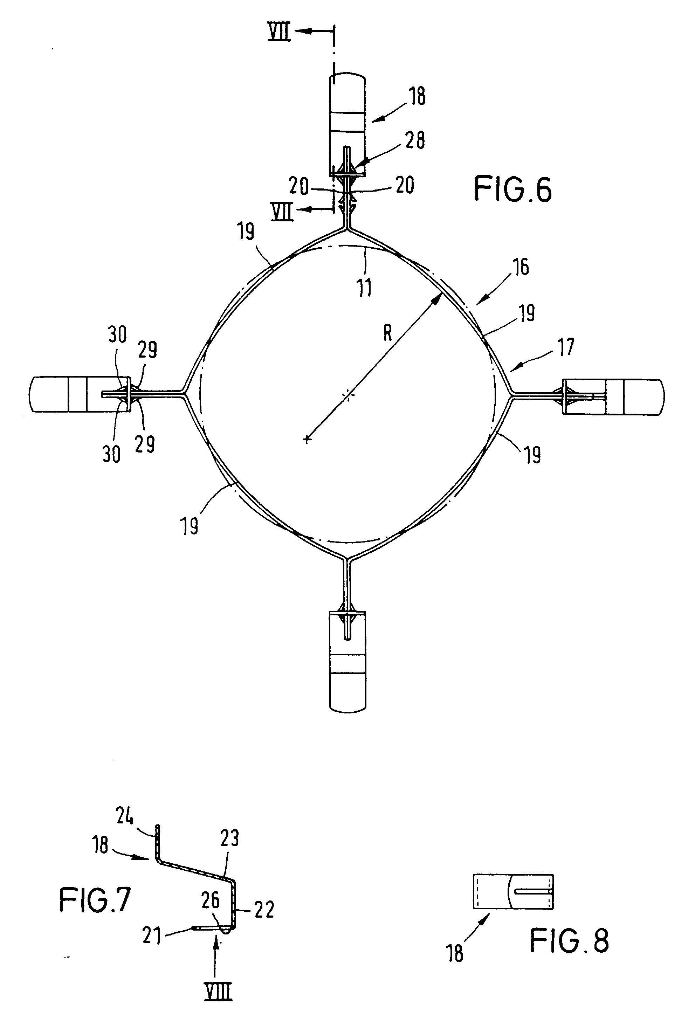

In Fig. 5 ist eine Variante gezeigt, bei der ein federnder Lappen 30 etwa in der Mitte des Armendes 27 und die gegenüberliegenden Lappen 32 an den oberen und unteren Rändern des Armendes herausgedrückt sind.

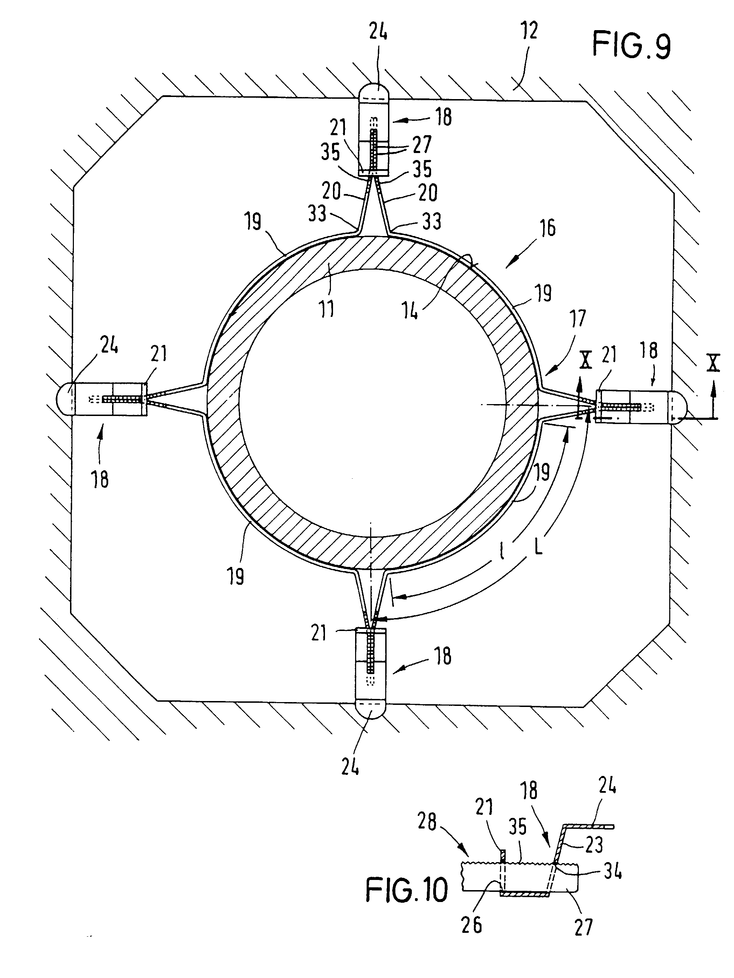

Bei der in den Fig. 6 bis 8 dargestellten Ausführungsform besteht der Abstandhalter 16 aus vier Ringsegmenten 19, die ebenso wie bei dem zuvor beschriebenen Ausführungsbeispiel einen Krümmungsradius R haben, der größer ist als der Radius r der äußeren Umfangsfläche 14 des Innenrohres 11, das hier nur schematisch durch eine strichpunktierte Linie angedeutet ist. Der in Fig. 6 dargestellte Abstandhalter 16 eignet sich besonders für solche Rohrleitungen, deren Mantelrohr einen quadratischen Innenquerschnitt hat und bei denen die Abstandhalter bei der Herstellung der Rohrleitung mit eingebaut werden. Die verwendeten Abstützelemente 18 haben wie bei dem zuvor beschriebenen Ausführungsbeispiel einen geraden Klemmschenkel 21, einen geraden Auflageschenkel 22 und einen geraden Tragschenkel 23. Der Stützschenkel 24 ist jedoch nicht eingerollt, sondern ebenfalls geradlinig, so daß er in einer Lagerfuge auf einen der Mantelsteine des Mantelrohres 12 aufgelegt werden kann, wie dies auch in Fig. 9 dargestellt ist.

Man erkennt in Fig. 6, daß die Manschette 17 aus vier einzelnen Ringsegmenten 19 zusammengesetzt ist, deren radial abstehende Arme 20 paarweise aufeinanderliegen und von jeweils einem Abstützelement zusammengehalten werden, in dessen Schlitz 26 jeweils ein Armpaar eingeschoben ist. Die Arretiervorrichtungen 28 bestehen auch hier aus federnden Lappen 29 und 30, die aus den Armen 20 nach außen herausgebogen sind und sich mit ihren Stirnrändern neben dem Schlitz 26 am Klemmschenkel 21 des Abstützelementes 18 abstützen.

Man erkennt im oberen Teil der Fig. 6, daß an den Armen 20 auch mehrere Lappenpaare in Radialrichtung hintereinander an den Armen angeordnet sein können, um die Abstützelemente 18 an verschiedenen Stellen der Arme arretieren zu können und die Abstandhalter 16 für Rohrleitungen mit verschieden großen Zwischenräumen 15 benutzen zu können.

In den Fig. 9 und 10 ist eine dritte Ausführungsform des Abstandhalters 16 nach der Erfindung gezeigt. Bei dieser Ausführungsform besteht der Abstandhalter 16 ebenfalls aus vier Ringsegmenten 19 und vier Abstützelementen 18, die den in den Fig. 7 und 8 dargestellten Abstützelementen ähnlich sind. Bei der Ausführungsform nach Fig. 9 liegen die Ringsegmente 19 der Manschette 17 auf ihrer ganzen Umfangslänge l am Außenumfang 14 des Innenrohres 11 an, ihre Länge l in Umfangsrichtung ist jedoch kleiner, als die zu dem jeweiligen Ringsegment 19 gehörende äußere Umfangslänge L des Innenrohres 11, die bei dem dargestellten Ausführungsbeispiel der Umfangslänge des Viertelkreises entspricht, den die äußere Umfangslinie des Innenrohres 11 beschreibt. Die abstehenden Arme 20 benachbarter Ringsegmente 19 liegen deshalb nicht schon an ihrer Wurzel 33 aufeinander, sondern nähern sich erst in einem gewissen radialen Abstand von der äußeren Umfangsfläche 14 des Innenrohres 11. Hierdurch ist es möglich, die Arme 20 benachbarter Ringsegmente in Umfangsrichtung zusammenzudrücken und hierdurch einen Klemmdruck mit der Manschette 17 auf das Innenrohr 11 auszuüben, wenn die Abstützelemente 18 radial verschoben werden und die Armenden 27 tiefer in den Schlitz 26 des Abstützelementes 18 hineingleiten.

Bei dem in den Fig. 9 und 10 dargestellten Ausführungsbeispiel sind auch die Abstützelemente 18 etwas anders ausgebildet.

Wie aus Fig. 10 hervorgeht, entsprechen die Abstützelemente 18 in ihrer äußeren Form im wesentlichen den in den Fig. 7 und 8 dargestellten Abstützelementen, sie haben jedoch nicht nur in ihrem Klemmschenkel 21 einen Schlitz 26, sondern darüber hinaus auch noch in dem Tragschenkel 23 eine schlitzförmige Öffnung 34, die mit dem Schlitz 26 im Klemmschenkel 21 fluchtet und ein tieferes Einschieben der Armenden 27 benachbarter Ringsegmente 19 in das Abstützelement 18 gestattet.

Bei der in den Fig. 9 und 10 dargestellten Ausführungsform ist auch die Arretiervorrichtung 28 etwas anders ausgebildet. Sie besteht nämlich bei dieser Ausführungsform aus Aufrauhungen 35, die sich in erster Linie auf den oberen Rändern der Armenden 27 befinden und mit den oberen Rändern des Schlitzes 26 und der schlitzförmigen Öffnung 34 zusammenwirken. Zusätzlich können aber auch Aufrauhungen an den unteren Rändern der Armenden 27 angeordnet sein.

Man erkennt, daß sich die Abstützelemente 18 an den Armenden 27 der Ringsegmente 19 von selbst arretieren, wenn die Manschette 17 in Axialrichtung der Rohrleitung belastet wird und diese Stützkraft von den Stützschenkeln 24 der Abstützelemente auf das Mantelrohr 12 übertragen werden muß.

Die Ringsegmente 19 können auch mehreckig ausgebildet sein, wenn das Innenrohr 11 keinen kreiszylindrischen Querschnitt hat, sondern quadratisch oder rechteckig ist.

## Patentansprüche

1. Abstandhalter für das Innenrohr (11) von mehrschaligen Rohrleitungen, wie Schornsteinen, Be- und Entlüftungskanälen oder Abgasleitungen, bei denen ein Mantelrohr (12) das Innenrohr (11) mit Abstand umgibt, mit einer das Innenrohr (11) umgreifenden, in ihrem Durchmesser veränderbaren Manschette (17) und mit Abstützelementen (18), die am Mantelrohr anliegen, **dadurch gekennzeichnet**, **daß** die Manschette (17) aus mindestens drei Ringsegmenten (19) besteht, die an ihren Enden angeordnete, etwa radial nach außen gerichtete Arme (20) aufweisen, an denen die Abstützelemente (18) befestigt sind.

2. Abstandhalter nach Anspruch 1, **dadurch gekennzeichnet**, **daß** die Ringsegmente (19) der Manschette (17) aus einem federelastischen Material bestehen und einem Krümmungsradius (R) haben, der größer ist als der Radius (r) der äußeren Umfangsfläche (14) eines zylindrischen Innenrohres (11).

3. Abstandhalter nach Anspruch 1 oder 2, **dadurch gekennzeichnet, daß** die Ringsegmente (19) in Umfangsrichtung eine Länge (l) haben, die kleiner ist als die zu dem jeweiligen Ringsegment (19) gehörende äußere Umfangsfläche (L) des Innenrohres (11).

4. Abstandhalter nach einem der Ansprüche 1 bis 3, d a d u r c h **gekennzeichnet daß** die Ringsegmente (19) der Manschette (17) auf ihrer ganzen Umfangsfläche (l) am Außenumfang (14) des Innenrohres (11) anliegen.

5. Abstandhalter nach einem der Ansprüche 1 bis 4, **dadurch gekennzeichnet, daß** die Ringsegmente (19) an den Enden (27) mindestens eines ihrer Arme (20) mit dem benachbarten Ringsegment (19) einstückig verbunden sind.

6. Abstandhalter nach einem der Ansprüche 1 bis 5, **dadurch gekennzeichnet, daß** die Arme (20) von je zwei benachbarten Ringsegmenten (19) durch je ein Abstützelement (18) miteinander verbunden sind.

7. Abstandhalter nach einem der Ansprüche 1 bis 6, **dadurch gekennzeichnet**, **daß** das Abstützelement (18) einen Stützschenkel (24), einen Tragschenkel (23) und mindestens eine Öffnung (34 bzw. 26) zur Aufnahme der Armenden (27) von zwei benachbarten Ringsegmenten (19) aufweist.

8. Abstandhalter nach einem der Ansprüche 1 bis 7, **dadurch gekennzeichnet, daß** die Ringsegmente (19) der Manschette (17) und die Abstützelemente (18) aus Blechstreifen gebildet sind und daß jedes Abstützelement (18) mindestens einen Schlitz (26) zum Einführen und eine Arretiervorrichtung (28) zum Arretieren der aufeinanderliegenden Armenden (27) von zwei benachbarten Ringsegmenten (19) aufweist.

9. Abstandhalter nach einem der Ansprüche 1 bis 8, **dadurch gekennzeichnet, daß** die Arretiervorrichtungen (28) an den Armen (20) der Ringsegmente (19) angeordnet sind.

10. Abstandhalter nach einem der Ansprüche 1 bis 9, **dadurch gekennzeichnet, daß** die Arretiervorrichtung (28) von Aufrauhungen (35) am cberen und/oder unteren Rand der Ringsegmentarme (20) gebildet werden, an denen sich der Schlitz (26) im Abstützelement (18) mit seinem oberen und unteren Rand verklemmt.

11. Abstandhalter nach einem der Ansprüche 1 bis 10, **dadurch gekennzeichnet, daß** die Arretiervorrichtung (28) von Noppen (31) und/oder federnden Lappen (29, 30, 32) gebildet wird, die aus den Armen (20) der Ringsegmente (19) herausgedrückt sind und neben dem Schlitz (26) am Abstützelement (18) anstoßen.

12. Abstandhalter nach einem der Ansprüche 1 bis 11, **dadurch gekennzeichnet, daß** das Abstützelement (18) einen Auflageschenkel (22) und einen Klemmschenkel (21) für die Ringsegmentarme (20) aufweist und daß mindestens im Klemmschenkel (21) ein Schlitz (26) zum Einstecken der Ringsegmentarme (20) angeordnet ist.

13. Abstandhalter nach einem der Ansprüche 1 bis 12, **dadurch gekennzeichnet**, **daß** der Stützschenkel (24) des Abstützelementes (18) etwa radial und parallel zum Auflageschenkel (22) angeordnet und so lang ist, daß er in das Mantelrohr (12) eingreifen kann.

14. Abstandhalter nach einem der Ansprüche 1 bis 12, **dadurch gekennzeichnet, daß** der Stützschenkel (24) als Federelement ausgebildet ist, das unter Vorspannung an der Innenwand (13) des Mantelrohres (12) anliegt.

## Claims

1. Spacer for the inner pipe (11) of multishell pipelines, such as chimneys, ventilation and venting ducts or waste-gas lines, in which a casing pipe (12) encloses the inner pipe (11) at a distance from the latter, having a sleeve (17), which engages round the inner pipe (11) and can be changed in diameter, and having supporting elements (18) which butt against the casing pipe, characterized in that the sleeve (17) comprises at least three ring segments (19) which have arms (20), which are arranged at the ends of the ring segments, are directed outwards approximately in the radial direction and on which the supporting elements (18) are fastened.

2. Spacer according to Claim 1, characterized in that the ring segments (19) of the sleeve (17) consist of a resilient material and have a radius of curvature (R) which is greater than the radius (r) of the outer circumferential surface (14) of a cylindrical inner pipe (11).

3. Spacer according to Claim 1 or 2, characterized in that the ring segments (19) have a length (l), in the circumferential direction, which is smaller than that outer circumferential surface (L) of the inner pipe (11) which belongs to the respective ring segment (19).

4. Spacer according to one of Claims 1 to 3, characterized in that the ring segments (19) of the sleeve (17) butt, over their entire circumferential surface (l), against the outer circumference (14) of the inner pipe (11).

5. Spacer according to one of Claims 1 to 4, characterized in that the ring segments (19) are connected integrally to the adjacent ring segment (19) at the ends (27) of at least one of their arms (20).

6. Spacer according to one of Claims 1 to 5, characterized in that the arms (20) of in each case two adjacent ring segments (19) are connected to one another by a supporting element (18) in each case.

7. Spacer according to one of Claims 1 to 6, characterized in that the supporting element (18) has a supporting leg (24), a carrying leg (23) and at least one opening (34 or 26) for receiving the arm ends (27) of two adjacent ring segments (19).

8. Spacer according to one of Claims 1 to 7, characterized in that the ring segments (19) of the sleeve (17) and the supporting elements (18) are formed from sheet-metal strip, and in that each supporting element (18) has at least one slit (26) for the introduction of the abutting arm ends (27) of two adjacent ring segments (19) as well as an arresting device (28) for arresting said arm ends.

9. Spacer according to one of Claims 1 to 8, characterized in that the arresting devices (28) are arranged on the arms (20) of the ring segments (19).

10. Spacer according to one of Claims 1 to 9, characterized in that the arresting devices (28) are formed by roughened sections (35) on the top border and/or bottom border of the ring-segment arms (20), the slit (26) in the supporting element (18) catching on said roughened sections by way of its top and bottom borders.

11. Spacer according to one of Claims 1 to 10, characterized in that the arresting device (28) is formed by protrusions (31) and/or resilient lugs (29,30,32), which are pushed out of the arms (20) of the ring segments (19) and strike against the supporting element (18) beside the slit (26).

12. Spacer according to one of Claims 1 to 11, characterized in that the supporting element (18) has a bearing leg (22) and a clamping leg (21) for the ring-segment arms (20), and in that a slit (26) for the insertion of the ring-segment arms (20) is arranged at least in the clamping leg (21).

13. Spacer according to one of Claims 1 to 12, characterized in that the supporting leg (24) of the supporting element (18) is arranged approximately radially with respect to, and parallel to, the bearing leg (22) and is of such a length that it can engage in the casing pipe (12).

14. Spacer according to one of Claims 1 to 12, characterized in that the supporting leg (24) is designed as a resilient element which butts against the inner wall (13) of the casing pipe (12) under prestressing.

## Revendications

1. Dispositif d'espacement pour le tube intérieur (11) de tuyauteries à plusieurs parois, telles que cheminées, conduits d'aération et d'extraction d'air ou conduites d'évacuation de gaz, dans lesquelles un tube d'enveloppe (12) entoure le tube intérieur (11) à distance, avec un manchon (17) de diamètre variable, entourant le tube intérieur (11) et avec des éléments d'appui (18), qui s'appliquent contre le tube d'enveloppe, caractérisé en ce que le manchon (17) est constitué d'au moins trois segments annulaires (19), qui présentent des bras (20) disposés à leurs extrémités, orientés radialement vers l'extérieur, sur lesquels sont fixés les éléments d'appui (18).

2. Dispositif d'espacement selon la revendication 1, caractérisé en ce que les segments annulaires (19) du manchon (17) sont faits d'un matériau présentant l'élasticité d'un ressort et présentent un rayon de courbure (R), qui est supérieur au rayon (r) de la surface périphérique extérieure (14) d'un tube intérieur (11) cylindrique.

3. Dispositif d'espacement selon la revendication 1 ou 2, caractérisé en ce que les segments annulaires (19) présentent, dans la direction périphérique, une longueur (l), qui est inférieure à la surface périphérique extérieure (L) du tube intérieur (11), faisant partie du segment annulaire (19) correspondant.

4. Dispositif d'espacement selon l'une des revendications 1 à 3, caractérisé en ce que les segments annulaires (19) du manchon (17) s'appliquent sur toute leur surface périphérique (l) contre le pourtour extérieur (14) du tube intérieur (11).

5. Dispositif d'espacement selon l'une des revendications 1 à 4, caractérisé en ce que les segments annulaires (19) sont reliés d'un seul tenant, aux extrémités (27) d'au moins l'un de leurs bras (20), avec le segment annulaire (19) voisin.

6. Dispositif d'espacement selon l'une des revendications 1 à 5, caractérisé en ce que les bras (20) de deux segments annulaires (19) voisins sont reliés entre eux par un élément d'appui (18).

7. Dispositif d'espacement selon l'une des revendications 1 à 6, caractérisé en ce que l'élément d'appui (18) comporte une branche d'appui (24), une branche de support (23) et au moins une ouverture (34 ou 26) destinée à recevoir les extrémités de bras (27) de deux segments annulaires (19) voisins.

8. Dispositif d'espacement selon l'une des revendications 1 à 7, caractérisé en ce que les segments annulaires (19) du manchon (17) et les éléments d'appui (18) sont formés dans des bandes de tôle et en ce que chaque élément d'appui (18) présente au moins une fente (26) pour l'introduction et un dispositif de blocage (28) pour le blocage des extrémités de bras (27) superposées de deux segments annulaires (19) voisins.

9. Dispositif d'espacement selon l'une des revendications 1 à 8, caractérisé en ce que les dispositifs de blocage (28) sont prévus sur les bras (20) des segments annulaires (19).

10. Dispositif d'espacement selon l'une des revendications 1 à 9, caractérisé en ce que le dispositif de blocage (28) est formé par des rugosités (35) sur le bord supérieur et/ou le bord inférieur des bras (20) des segments annulaires, dans lesquelles la fente (26) de l'élément d'appui (18) s'accroche avec son bord supérieur et son bord inférieur.

11. Dispositif d'espacement selon l'une des revendications 1 à 10, caractérisé en ce que le dispositif de blocage (28) est formé par des boutons (31) et/ou des pattes formant ressort (29, 30, 32), qui sont pressés hors des bras (20) des segments annulaires (19) et qui viennent appuyer l'élément d'appui (18), à côté de la fente (26).

12. Dispositif d'espacement selon l'une des revendications 1 à 11, caractérisé en ce que l'élément d'appui (18) présente une branche d'assise (22) et une branche de serrage (21) pour les bras (20) des segments annulaires et en ce qu'au moins dans la branche de serrage (20) est prévue une fente (26) pour l'introduction des bras (20) des segments annulaires.

13. Dispositif d'espacement selon l'une des revendications 1 à 12, caractérisé en ce que la branche d'appui (24) de l'élément d'appui (18) est disposée à peu près radialement et parallèlement à la branche d'assise (22) et est suffisamment longue pour pouvoir s'engager dans le tube d'enveloppe (12).

14. Dispositif d'espacement selon l'une des revendications 1 à 12, caractérisé en ce que la branche d'appui (24) est conformée en élément élastique, qui s'applique sous précontrainte contre la paroi intérieure (13) du tube d'enveloppe (12).
